# EUROPÄISCHE PATENTSCHRIFT

(11) **EP 0 664 239 B1**
(45) Veröffentlichungstag und Bekanntmachung des Hinweises auf die Patenterteilung: **12.03.1997**
(21) Anmeldenummer: 94120775.5
(22) Anmeldetag: 27.12.1994
(51) Int. Cl.: B60R 1/06

(54) **Aussenrückblickspiegel für Kraftfahrzeuge**
Exterior rear view mirror for vehicles
Rétroviseur extérieur pour véhicules

(30) Priorität: 21.01.1994 DE 4401632
(43) Veröffentlichungstag der Anmeldung: 26.07.1995
(73) Patentinhaber: Mittelhäuser, Bernhard, D-30900 Wedemark (DE)
(72) Erfinder: Jenssen, Thomas, D-30900 Wedemark (DE); Kürschner, Norbert, D-30900 Wedemark (DE)
(74) Vertreter: Depmeyer, Lothar

(56) Entgegenhaltungen:
- DE-A- 4 219 930
- DE-U- 9 109 216
- FR-A- 2 264 685
- FR-A- 2 264 686

## Beschreibung

Die Erfindung betrifft einen Aussenrückblickspiegel für Kraftfahrzeuge mit einem in einem schalenförmigen Gehäuse angeordneten, verstellbar gelagerten Spiegelglas, wobei das Gehäuse über ein Zapfengelenk abklappbar an einem am Fahrzeug befestigten Fuss gelagert ist und die Schwenkachse zumindest im wesentlichen senkrecht verläuft.

Ein derartiger Aussenrückblickspiegel ist aus DE-A-4 219 930 bekannt.

Bei einem solchen Rückblickspiegel kann das Gehäuse beim Auftreffen auf einen Widerstand bzw. zum Parken nach vorne bzw. hinten, und zwar so abgeklappt werden, dass das Gehäuse in seiner Endstellung im wesentlichen in Fahrzeuglängsrichtung zeigt. Das Zapfengelenk muss somit einerseits das Gehäuse in der Betriebsstellung rüttelsicher halten können, andererseits aber - nach Überwindung eines gewissen Widerstandes die vorgenannte Verschwenkung und natürlich eine entsprechende Rückverschwenkung ermöglichen. Dazu waren nach bekannten Vorschlägen Zapfengelenke vorgesehen, deren Reibschluss durch eine konzentrisch angeordnete Druckfeder aufrechterhalten wird. Ein so aufgebautes, aus geschlossen ringförmigen Teilen bestehendes Zapfengelenk bietet beim Zusammenbau des Spiegels nicht unerhebliche Schwierigkeiten.

Der Erfindung liegt die Aufgabe zugrunde, für Spiegel der eingangs erwähnten Art Zapfengelenke vorzuschlagen, die eine einfache, schnelle Montage des Spiegels zulassen, im übrigen aber eine rüttelsichere Lagerung gewährleisten und auch den übrigen Anforderungen gerecht werden.

Zur Lösung dieser Aufgabe sind erfindungsgemäss die zur Aufnahme von Axialkräften dienenden Mittel des Zapfengelenkes in einer Schwenkstellung des Gehäuses in der Weise ausgespart, dass das Gehäuse und der Fuss durch eine Axialbewegung der Gelenkteile zusammensetzbar sind. Zweckmässigerweise wird dabei eine Aussparung im Endbereich des möglichen Schwenkbereiches vorgesehen, um so das Gehäuse und den Fuss zusammensetzen zu können, wenn das Gehäuse im Bereich der einen oder der anderen Schwenkstellung angeordnet ist, womit aus Sicherheitsgründen ausgeschlossen ist, dass in anderen Schwenkstellungen ggfs. ungewollt ein Lösen der genannten Teile eintreten kann. Eine solche Ausbildung des Zapfenlagers geht von der Erkenntnis aus, dass die technischen Mittel zur Sicherung des Zusammenhaltes des Spiegels vergleichsweise gering sind, während jedoch die Einsparungen bei der Spiegelherstellung erheblich sind, zumal sich das Gelenk an versteckter, schlecht zugänglicher Stelle des Rückblickspiegels befindet und Manipulationen an dieser Stelle besonders aufwendig sind.

Die Erfindung schliesst nicht aus, dass mit dem Zusammensetzen des Spiegels selbsttätig wirkende Fallen oder Schnappglieder wirksam werden können, um den Zusammenhalt des Zapfengelenkes nach dem Zusammenbau auch im Bereich der erwähnten Ausparungen abzusichern.

Vorteilhaft ist es ferner, wenn die Wirkteile des Zapfengelenkes ( z.B. an der Aussenseite des Zapfens und an der Innenseite der zugehörigen Buchse ) kammartig ineinandergreifen, um so eine besonders gute Stabilität und eine praktisch spielfreie Lagerung erzielen zu können.

Weitere Einzelheiten der Erfindung werden anhand der Zeichnung erläutert, in der ein Ausführungsbeispiel der Erfindung dargestellt ist. Es zeigen :
- Fig. 1: einen Aussenrückblickspiegel für Kraftfahrzeuge in der Draufsicht,
- Fig. 2: einen Teilschnitt nach der Linie II - II von Fig. 1 und
- Fig. 3: einen Schnitt nach der Linie III - III von Fig. 2.

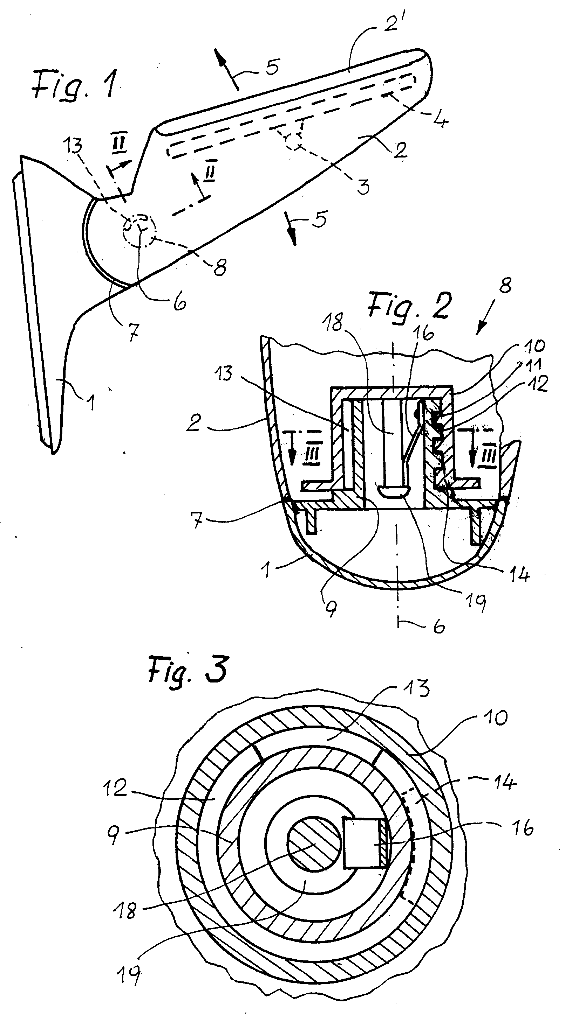

Der Spiegel besteht im wesentlichen aus einem Fuss 1, einem im wesentlichen schalenförmigen, in Fahrtrichtung des Fahrzeuges gesehen hinten offenen Gehäuse 2 und einem darin z.B. mittels Kugelgelenk 3 verstellbaren Spiegelglas 4. Dabei können beliebige Verstellmittel benutzt werden, um das Spiegelglas 4 vom Inneren des Fahrzeuges her verstellen zu können. Die Mittel zur Befestigung des Fusses 1 am Fahrzeug sind ebenfalls nicht dargestellt.
Gemäss Fig. 1 befindet sich das Gehäuse 2 in der Wirkstellung. Es kann jedoch zur Erzielung einer Parkstellung bzw. beim Auftreffen auf ein Hindernis im Sinne der beiden Pfeile 5 nach vorne bzw. nach hinten abklappen. Die Klappachse ist mit 6 bezeichnet. Um ein solches Abklappen zu ermöglichen, ist gemäss Fig. 1 eine bogenförmige Trennfuge 7 zwischen dem Fuss 1 und dem Gehäuse 2 vorgesehen.

Die Verschwenkbarkeit des Gehäuses 2 gegenüber dem Fuss 1 wird durch ein Zapfengelenk 8 erreicht, dessen etwa senkrechter, innen hohl gehaltener, oben frei auslaufender Zapfen 9 von einer fest mit dem Gehäuse 2 verbundenen Buchse 1o umschlossen ist, die oben geschlossen ist und einen lichten Innendurchmesser aufweist, der dem Aussendurchmesser des Zapfens 9 entspricht.

Der Zapfen 9 hat mehrere über seine Länge verteilte Ringnuten 11, zwischen denen ringförmige Rippen 12 verbleiben. Diese Rippen 12 erstrecken sich jedoch nicht über den gesamten Umfang des Zapfens 9, sie sind vielmehr unterbrochen unter Bildung einer axialen Ausparung 13, die - wie auch Fig. 1 erkennen lässt - nur an der Seite des Spiegels angeordnet ist, an der sich die Öffnung 2' des Gehäuses 2 befindet. Die Aussparung 13 erstreckt sich über etwa 50 - 80 ° des Zapfenumfanges.

An der Innenseite der Buchse 1o befinden sich mehrere rippenartige Vorsprünge 14, deren Querschnitt demjenigen der Ringnuten 11 entsprechen, wobei jeder Ringnut 11 ein gebogener Vorsprung 14 zugeordnet ist. Die Umfangserstreckung dieser axial fluchtenden Vorsprünge 14 ist etwas geringer als die Umfangserstreckung der Aussparung 13, aber immerhin so gross, dass eine ausreichende Gelenkfestigkeit durch den Eingriff der Vorsprünge 14 in die Ringnuten 11 erreicht wird. Somit ist in der Wirkstellung gemäss Fig. 1 ein axialer Versatz des Gehäuses 2 gegenüber dem Fuss 1 bzw. ein Entfernen des Gehäuses 2 nicht möglich, gleichwohl lassen aber die Vorsprünge 14 durch Gleiten in den Ringnuten 11 eine Klappbewegung des Gehäuses 2 zu.

Die Aussparung 13 befindet sich - wie erwähnt - an der der Öffnung 2' zugekehrten Seite des Spiegels, und zwar an der Stelle, an die die Vorsprünge 14 gelangen, wenn das Gehäuse 2 gegen die Fahrtrichtung des Fahrzeuges abgeklappt ist und dort seine Endstellung eingenommen hat. Dies bedeutet wiederum, dass beim Zusammenbau des Spiegels ( Spiegelherstellung ) Gehäuse 2 und Fuss 1 allein durch Zusammenstecken vereinigt werden können. Durch Verschwenken des Gehäuses 2 nimmt dann der Spiegel seine Wirkstellung gemäss Fig. 1 ein.

Um zu verhindern, dass in der vorerwähnten Endstellung die Teile 1 und 2 wieder unbeabsichtigt voneinander gelöst werden können, ist an der Innenseite des Zapfens 9 eine im wesentlichen axial verlaufende Blattfeder 16 befestigt und innen an der Buchse 1o ein sich nach unten erstreckender Bolzen 18 mit einer Endverdickung 19.Wird unter diesen Voraussetzungen die Buchse 1o auf den Zapfen 9 aufgeschoben, so wird zunächst die Blattfeder 16 durch die Endverdickung 19 verdrängt. In der Endstellung gemäss Fig. 2 hinterfasst dann die Blattfeder die Endverdickung 19 und sichert so die Stellung der Buchse 1o. Es versteht sich, dass anstelle der einschnappenden Blattfeder 16 auch andere Arretiermittel eingesetzt werden können. Schliesslich kann auch das Gehäuse 2 durch eine Sperre daran gehindert werden,genau die Stellung zu erreichen, die zum Abziehen der Buchse 10 notwendig ist.

Wie bei klappbaren Spiegeln üblich, kann auch die Wirkstellung des Gehäuses 2 gerastet sein; diese Rastung muss dann erst überwunden werden, um eine Klappbewegung des Gehäuses 2 vollziehen zu können.

Aus Fig. 1 ist ersichtlich, dass Fig. 2 ein Winkelschnitt ist; es sei erwähnt, dass in Abweichung davon in Fig. 3 die Darstellung in natürlicher Position der Teile gemäss Fig. 1 wiedergegeben ist. ( Die Aussparung 13 befindet sich in Übereinstimmung mit Fig. 1 in der Zeichenebene oben. )

## Patentansprüche

1. Aussenrückblickspiegel für Kraftfahrzeuge mit einem in einem schalenförmigen Gehäuse verstellbar angeordneten Spiegelglas, wobei das Gehäuse über ein Zapfengelenk abklappbar an einem am Fahrzeug befestigten Fuss gelagert ist und die Schwenkachse zumindest im wesentlichen senkrecht verläuft, dadurch gekennzeichnet, dass die zur Aufnahme von Axialkräften dienenden Mittel (12, 14) des Zapfengelenks (8) in einer Schwenkstellung des Gehäuses (2) in der Weise ausgespart sind, dass das Gehäuse (2) und der Fuss (1) durch eine Axialbewegung der Gelenkteile zusammensetzbar sind.

2. Spiegel nach Anspruch 1, dadurch gekennzeichnet, dass die Aussparung (13) so angeordnet ist, dass das Zusammensetzen nur in einer Endstellung des Gehäuses (2) erfolgen kann.

3. Spiegel nach Anspruch 1, dadurch gekennzeichnet, dass in der zum Zusammensetzen geeigneten Stellung des Gehäuses (2) die Gelenkteile (9,10) gegen axialen Versatz arretierbar sind.

4. Spiegel nach Anspruch 3, dadurch gekennzeichnet, dass selbsttätig wirkende Arretiermittel (16,19) vorgesehen sind.

5. Spiegel nach Anspruch 4, dadurch gekennzeichnet, dass Fallen oder Schnappglieder vorgesehen sind.

6. Spiegel nach Anspruch 1, dadurch gekennzeichnet, daß der Zapfen (9) und die Buchse (10) des Gelenks kammartig ineinander greifen ( Fig. 2, rechte Hälfte ).

7. Spiegel nach Anspruch 6, dadurch gekennzeichnet, dass an einem Element des Gelenks (10) übereinander angeordnet Ringnuten und an dem anderen Element gebogene Vorsprünge (14) angeordnet sind, deren Querschnitt demjenigen der Ringnuten entspricht.

8. Spiegel nach Anspruch 7, dadurch gekennzeichnet, dass die zwischen den Ringnuten (11) befindlichen rippenartigen Elemente (12) sich nur über einen Teil des Umfangs des Zapfengelenks (8) erstrecken und die Umfangserstreckung der Vorsprünge (14) im wesentlichen der Umfangserstreckung entpricht, die von den Elementen (12) frei ist.

9. Spiegel nach Anspruch 8, dadurch gekennzeichnet, dass die Umfangserstreckung der Vorsprünge (14) in etwa 50 - 90 ° des Zapfenumfangs entspricht.

## Claims

1. External rear-view mirror for automotive vehicles, having a mirror glass displaceably disposed in a dish-shaped housing, the housing being pivotably mounted on a base, which is secured to the vehicle, via a pivot joint, the pivot axis extending at least substantially perpendicularly, characterised in that means (12, 14) of the pivot joint (8), which means serve to absorb axial forces, are recessed in a pivotal position of the housing (2) in such a manner that the housing (2) and the base (1) can be assembled by an axial displacement of the joint members.

2. Mirror according to claim 1, characterised in that the recess (13) is so disposed that the assembly can only be effected from one end position of the housing (2).

3. Mirror according to claim 1, characterised in that the joint members (9, 10) are lockable in the assembly position of the housing (2) to prevent axial displacement.

4. Mirror according to claim 3, characterised in that automatically operating locking means (16, 19) are provided.

5. Mirror according to claim 4, characterised in that catches or snap-locking members are provided.

6. Mirror according to claim 1, characterised in that the pin (9) and the bush (10) of the joint intermesh with each other (Fig. 2, right-hand half).

7. Mirror according to claim 6, characterised in that annular grooves, which are disposed above one another, are provided on one element of the joint (10), and curved projection members (14) are disposed on the other element, the cross-section of said projection members corresponding to that of the annular grooves.

8. Mirror according to claim 7, characterised in that the rib-like elements (12), which are situated between the annular grooves (11), extend only over a portion of the circumference of the pivot joint (8), and the circumferential extension of the projection members (14) corresponds substantially to the circumferential extension which is free of the elements (12).

9. Mirror according to claim 8, characterised in that the circumferential extension of the projection members (14) corresponds substantially to 50 - 90° of the pin circumference.

## Revendications

1. Rétroviseur extérieur de véhicule automobile, comprenant un verre de miroir monté orientable et disposé dans un boîtier en forme de cuvette, le boîtier étant monté par l'intermédiaire d'une articulation à pivot de manière à pouvoir être rabattu sur une embase fixée au véhicule et l'axe de basculement s'étendant au moins sensiblement verticalement, caractérisé en ce que les moyens (12, 14) de l'articulation (8) à pivot, qui servent à absorber des forces axiales, sont évidés en une position de basculement du boîtier (2) de manière que le boîtier (2) et l'embase (1) puissent être assemblés par un mouvement axial des pièces de l'articulation.

2. Rétroviseur suivant la revendication 1, caractérisé en ce que l'évidement (13) est disposé de manière que l'assemblage ne peut s'effectuer qu'en une position d'extrémité du boîtier (2).

3. Rétroviseur suivant la revendication 1, caractérisé en ce que dans la position du boîtier (2) qui convient pour l'assemblage, les pièces (9, 10) d'articulation peuvent être bloquées à l'encontre de tout décalage axial.

4. Rétroviseur suivant la revendication 3, caractérisé en ce qu'il est prévu des moyens (16, 19) automatiques de blocage.

5. Rétroviseur suivant la revendication 4, caractérisé en ce qu'il est prévu des pênes ou des organes d'encliquetage.

6. Rétroviseur suivant la revendication 1, caractérisé en ce que le tourillon (9) et la douille (10) de l'articulation s'interpénètrent à la manière d'un peigne (figure 2, moitié droite).

7. Rétroviseur suivant la revendication 6, caractérisé en ce que sur un élément de l'articulation (10) il est prévu des gorges annulaires superposées est sur l'autre élément des saillies (14) incurvées dont la section transversale correspond à celle des gorges annulaires.

8. Rétroviseur suivant la revendication 7, caractérisé en ce que les éléments (12) en forme de nervures se trouvant entre les gorges (11) annulaires ne s'étendent que sur une partie de la périphérie de l'articulation (8) à pivot et l'étendue périphérique des saillies (14) correspond sensiblement à l'étendu périphérique qui est dégagée par les éléments (12).

9. Rétroviseur suivant la revendication 8, caractérisé en ce que l'étendue périphérique des saillies (14) représente environ 50 à 90° de la périphérie du tourillon.
